# EUROPÄISCHE PATENTANMELDUNG

(11) **EP 3 488 813 A1**
(43) Veröffentlichungstag der Anmeldung: **29.05.2019**
(21) Anmeldenummer: 18159667.7
(22) Anmeldetag: 02.03.2018
(51) Int. Cl.: A61C 8/00, A61C 13/00

(54) **VERFAHREN ZUR HERSTELLUNG EINER ZAHNERSATZ-VORRICHTUNG UMFASSEND EINE INTERFACE-BESCHICHTUNG, SOWIE EINE SOLCHE ZAHNERSATZ-VORRICHTUNG**

(30) Priorität: 23.11.2017 RU 2017140881
(71) Anmelder: Conmet GmbH, 125413 Moskau (RU); Oranskiy, Iakov Iosifovich, 117335 Moskau (RU)
(72) Erfinder: Oranskiy, Iakov Iosifovich, 117335 Moskau (RU)
(74) Vertreter: Hertin und Partner Rechts- und Patentanwälte PartG mbB

(57) **Zusammenfassung**

Die Erfindung betrifft ein Verfahren zur Herstellung einer Zahnersatz-Vorrichtung umfassend ein Interface und eine Basis, sowie eine solche Zahnersatz-Vorrichtung. In weiteren Aspekten der Erfindung werden eine chemische Zusammensetzung umfassend ein Metalloxid, die Verwendung der Zusammensetzung als Schutzschicht zur Aufbringung auf eine Zahnersatz-Vorrichtung und ein System umfassend eine Zahnersatz-Vorrichtung und ein Dentalimplantat beschrieben.

## Beschreibung

Die Erfindung betrifft ein Verfahren zur Herstellung einer Zahnersatz-Vorrichtung umfassend ein Interface und eine Basis, sowie eine solche Zahnersatz-Vorrichtung. In weiteren Aspekten der Erfindung werden eine chemische Zusammensetzung umfassend ein Metalloxid, die Verwendung der Zusammensetzung als Schutzschicht zur Aufbringung auf eine Zahnersatz-Vorrichtung und ein System umfassend eine Zahnersatz-Vorrichtung und ein Dentalimplantat beschrieben.

Im Stand der Technik sind Zahnersatz-Vorrichtungen bekannt, mit denen beispielsweise nach Verlust eines oder mehrerer Zähne die Kaufunktion wiederhergestellt werden kann. Solche Zahnersatz-Vorrichtungen können in ein Dentalimplantat eingeschraubt oder in einem Dentalimplantat befestigt werden, wobei das Dentalimplantat zuvor in den Kiefer eines Patienten eingebracht wurde. Ein solches Dentalimplantat wird im Sinne der Erfindung bevorzugt auch als "Implantat" bezeichnet. Es ist insbesondere bevorzugt, dass das Implantat in die Kieferknochen des Patienten eingepflanzt wird.

Bekannte Zahnersatz-Vorrichtungen umfassen üblicherweise einen unteren Bereich, mit dem die Zahnersatz-Vorrichtung an dem Implantat befestigt werden kann. Dieser Bereich der Zahnersatz-Vorrichtung wird bei konventionellen Zahnersatz-Vorrichtungen als Abutment bezeichnet und stellt üblicherweise ein separates Zwischenelement dar, das zumeist zwischen Implantat und dem oberen Zahnkronenaufbau der Zahnersatz-Vorrichtung vorliegt. Aufgrund der Vorsehung des Abutments als separates Zwischenglied und Bestandteil einer konventionellen Zahnersatz-Vorrichtung werden konventionelle Zahnersatz-Vorrichtung im Sinne der Erfindung als "mehrteilig" bezeichnet. Das Abutment kann ein Interface umfassen, wobei das Interface vorzugsweise die abutmentseitige Grenzfläche gegenüber dem Dentalimplantat darstellt. Mit anderen Worten ist das Interface der Bestandteil des Abutment, welcher mit dem Implantat in Eingriff vorliegt, d.h. im Sinne der Erfindung vorzugsweise so mit dem Dentalimplantat wechselwirkt, dass eine Verbindung zwischen Abutment und Implantat hergestellt wird. Die Wechselwirkung zwischen Abutment, Interface und Dentalimplantat und ihre Anordnung zueinander wird insbesondere in den Figuren 5 bis 7 dieses Dokuments verdeutlicht. Vorzugsweise stellt das Abutment den Teil der Zahnersatz-Vorrichtung dar, mit dem die Vorrichtung im Kiefer eines Patienten befestigt wird, insbesondere indem das Abutment in das Dentalimplantat eingebracht und dort befestigt wird, wobei das Dentalimplantat zuvor in den Kieferknochen des Patienten eingesetzt und/oder eingepflanzt wurde. Es ist im Sinne der Erfindung bevorzugt, dass das Interface insbesondere dem Kieferknochen des Patienten zugewandt ist und vorzugsweise dazu verwendet wird, um eine Befestigung der Zahnersatz-Vorrichtung innerhalb des Kieferknochens zu erreichen. Es ist im Sinne der Erfindung bevorzugt, dass für die Herstellung des Dentalimplantats insbesondere Titan und/oder Titanlegierungen verwendet werden.

Eine Zahnersatz-Vorrichtung umfasst üblicherweise eine Basis, die bevorzugt den oberen Teil des Abutments umgibt. Die Basis der Zahnersatz-Vorrichtung kann von einer Krone umgeben sein, wobei die Krone vorzugsweise den oberen Teil der Zahnersatz-Vorrichtung darstellt, der beispielsweise im Mundraum des Patienten sichtbar ist und der optisch vorzugsweise an das Aussehen der übrigen Zähne angepasst werden kann.

Konventionelle zweiteilige Zahnersatz-Vorrichtungen umfassen üblicherweise eine Krone und ein Abutment. Dabei wird häufig die Zahnersatz-Vorrichtung mit Hilfe eines Abutments in einem Implantat im Kiefer des Patienten befestigt, wobei das Abutment anschließend mit der Krone verbunden wird. Bei konventionellen Zahnersatz-Vorrichtungen bestehen vor allem die Abutments und die Dentalimplantate aus Titan oder einer Titan-Legierung, d.h. im Sinne der Erfindung bevorzugt einer Legierung, die Titan umfasst. Nachteilig an der Verwendung von Titan und/oder einer Titan-Legierung im Bereich der Zahnersatz-Vorrichtungen ist, dass der Wärmeausdehnungskoeffizient von Titan und/oder der üblichen Titan-Legierungen vom Wärmeausdehnungskoeffizienten der üblicherweise verwendeten Keramik-Materialien abweicht, die beispielsweise für die Herstellung der Krone verwendet werden. Dadurch kann es zu Spannungen innerhalb der Zahnersatz-Vorrichtungen kommen und zu unerwünschten Rissen, die die Funktionalität der Vorrichtung beeinträchtigen und gegebenenfalls einen Austausch erforderlich machen können. Ferner können sich innerhalb der Risse unerwünschterweise Bakterien und/oder Essensreste ansammeln, die beispielsweise zu Zahnfleischentzündungen führen können.

Darüber hinaus können bei der Verblendung konventioneller Zahnersatz-Vorrichtungen Oxidschichten durch das Verblenden des Rohlings mit einem Keramik-Material entstehen. Diese Oxidschichten treten beispielsweise beim Sintern des keramischen Materials auf, wobei üblicherweise die gesamte Zahnersatz-Vorrichtung in den Sinterofen eingebracht wird. Die Oxidschichten sind zwar wünschenswert, um eine stabilere Verbindung zwischen der Krone und der Keramik-Verblendung zu erreichen. Allerdings sind die Oxidschichten insbesondere dann schädlich und nachteilig, wenn sie auf dem Interface vorliegen. Sie werden daher üblicherweise entfernt, zumeist durch Sandstrahlen oder Polieren. Allerdings kommt es dadurch häufig zu Beschädigungen des Abutment-Interfaces und die durch den Fräsprozess erhaltene Genauigkeit des Interfaces geht verloren. Dadurch können bei der Herstellung der Verbindung zwischen der Zahnersatz-Vorrichtung und dem Implantat im Kiefer des Patienten unerwünschte Spalten und/oder Öffnungen entstehen, in denen sich Bakterien ansiedeln und vermehren können. Aufgrund der verlorengegangenen Genauigkeit der Verbindung kann es beim Kauen zu mechanischen Belastungen kommen, die negative Auswirkungen auf das Wohlbefinden des Patienten haben können. Beispielsweise können Mikrooszillationen oder ein Spiel auftreten, was bei den hohen mechanischen Belastungen, die im Mund eines Menschen auftreten können, zu unangenehmen Begleiterscheinungen für den Patienten führen kann.

Es sind im Stand der Technik auch Fälle bekannt geworden, in denen sich aufgrund der unterschiedlichen elektrischen Eigenschaften der Materialien der verschiedenen Elemente, aus denen die Zahnersatz-Vorrichtung besteht, ein elektrisches Potential bildet zwischen dem Implantat-Material und dem Material des Abutments und/oder der Krone. Dieser Nachteil ergibt sich insbesondere daraus, dass die Implantate häufig Titan und/oder Titanlegierungen umfassen, während das Abutment und/oder die Krone häufig Kobalt und/oder Cobalt-Chrom-Legierungen umfassen. Die Begriffe "Cobalt-Chrom-Legierung" und "Chrom-Cobalt-Legierung" werden im Sinne der Erfindung bevorzugt synonym verwendet. Der sich ergebende Potentialunterschied kann zu einem elektrischen Stromfluss in der Mundhöhle führen, der vom Patienten als unangenehm wahrgenommen wird.

Es ist daher Aufgabe der vorliegenden Erfindung, eine Zahnersatz-Vorrichtung und ein Verfahren zur Herstellung einer Zahnersatz-Vorrichtung bereitzustellen, die nicht die Nachteile und Mängel des Standes der Technik aufweisen. Dabei soll insbesondere die Bildung von Spalten und Rissen innerhalb der Zahnersatz-Vorrichtung vermieden und die Verbindung zwischen der Zahnersatz-Vorrichtung und dem Dentalimplantat im Kiefer des Patienten verbessert werden. Insbesondere soll durch den verbesserten Anschluss der Zahnersatz-Vorrichtung an das Implantat die Haltbarkeit und die Tragedauer der Zahnersatz-Vorrichtung verlängert werden. Darüber hinaus soll die Entstehung eines elektrischen Potentialunterschieds im Mundraum eines Patienten, welcher durch die Verwendung unterschiedlicher metallischer Materialien im Bereich Zahnersatz-Vorrichtung und/oder der Dentalimplantate hervorgerufen werden kann, verhindert werden.

### Beschreibung der Erfindung:

Gelöst wird die Aufgabe durch die Merkmale der unabhängigen Ansprüche. Vorteilhafte Ausgestaltungen der Erfindung sind in den abhängigen Ansprüchen beschrieben. Erfindungsgemäß ist ein Verfahren zur Herstellung einer Zahnersatz-Vorrichtung umfassend ein Interface und eine Basis vorgesehen, das die folgenden Schritte umfasst:
a) Bereitstellung eines Rohlings,
b) Bereitstellung einer Schutzschicht zur Abdeckung des Rohlings,
wobei am Ende des Verfahrens insbesondere das Interface mit der Schutzschicht bedeckt vorliegt.

Es ist im Sinne der Erfindung bevorzugt, dass das Verfahren einen weiteren Schritt umfasst, nämlich das Fräsen des Rohlings, wodurch die Basis der Zahnersatz-Vorrichtung erhalten wird. Dieser Schritt kann beispielsweise nach der Bereitstellung der Schutzschicht erfolgen. Die Durchführung dieses Schritts ist besonders bevorzugt, wenn die Zahnersatz-Vorrichtung unter Verwendung eines Premills oder einer Preform hergestellt wird. Wenn zum Beispiel einschraubbare Brücken oder Stege hergestellt werden sollen, wird vorzugsweise zunächst ein Gerüst für die Zahnersatz-Vorrichtung gefräst und anschließend die Oberfläche. Es ist im Sinne der Erfindung bevorzugt, dass einschraubbare Brücken oder Stege ohne die Verwendung von Premills und/oder Preforms hergestellt werden. Vorzugsweise werden sie zusammen mit dem Interface aus einem Stück gefräst. Das Gerüst der Zahnersatz-Vorrichtung kann vorzugsweise nicht nur gefräst werden, sondern es kann im Sinne der Erfindung auch bevorzugt sein, dass es gegossen, mit Sinter-Verfahren und/oder mit Laser-Sinter-Verfahren hergestellt wird. Es ist insbesondere bevorzugt, dass das Gerüst eine Chrom-Cobalt-Legierung, Titan und/oder eine Edelmetalllegierung umfasst.

In einem weiteren Aspekt betrifft die Erfindung eine Zahnersatz-Vorrichtung, wobei die Zahnersatz-Vorrichtung insbesondere dadurch gekennzeichnet ist, dass die Zahnersatz-Vorrichtung mit dem vorgeschlagenen Verfahren hergestellt wird. Darüber hinaus ist die Zahnersatz-Vorrichtung dadurch gekennzeichnet, dass die Zahnersatz-Vorrichtung ein Interface und eine Schutzschicht umfasst und das Interface mit der Schutzschicht bedeckt vorliegt.

Die Zahnersatz-Vorrichtung ist vorzugsweise insbesondere dadurch gekennzeichnet, dass die Basis der Zahnersatz-Vorrichtung in dem Sinne einteilig ausgebildet ist, dass sie gleichzeitig als Abutment im Sinne konventioneller Zahnersatz-Vorrichtungen fungiert, d.h. insbesondere der Verbindung zwischen Zahnersatz-Vorrichtung und Dentalimplantat dient. Es ist daher im Sinne der vorliegenden Erfindung bevorzugt, dass die Basis ein Interface umfasst, wobei das Interface vorzugsweise dazu eingerichtet ist, als Grenzfläche, Verbindungsfläche und/oder Übergang zwischen Zahnersatz-Vorrichtung und Implantat zu dienen. Damit wird bei der erfindungsgemäßen Zahnersatz-Vorrichtung vorteilhafterweise ein Bestandteil, nämlich das Abutment, eingespart, wobei durch eine Reduktion der Bestandteile die Komplexität der Vorrichtung verringert wird und Fehlpassungen und Potentialunterschiede aufgrund unterschiedlicher Materialien zwischen den einzelnen Bestandteilen der Zahnersatz-Vorrichtung wirksam vermieden werden. Es ist im Sinne der Erfindung bevorzugt, dass das Interface als vorzugsweise dreidimensionaler Vorsprung im unteren Bereich der Basis angeordnet vorliegt, wobei der Vorsprung und die Basis vorzugsweise aus einem Material und "in einem Guß" hergestellt werden können. Basis und Interface sind im Sinne der Erfindung aus einem Werkstück gefertigt, beispielsweise einem Rohling, und stellen vorzugsweise unterschiedliche Bereiche eines dreidimensionalen Objekts dar. Diese Zusammengehörigkeit von Interface und Basis wird im Sinne der Erfindung bevorzugt auch als monolithische Verbindung zwischen Interface und Basis bezeichnet. Der Begriff der einteiligen Ausführung der Basis steht daher nicht im Widerspruch zu der Aussage, dass die Basis ein Interface umfasst, da das Interface vorzugsweise eine unteren Bereich desselben Basis-Werkstücks darstellt, wobei das Interface vorzugsweise dazu eingerichtet ist, die Zahnersatz-Vorrichtung mit dem Dentalimplantat im Kiefer eines Patienten zu verbinden, während die Basis mit einem keramischen Material versehen werden kann, wodurch vorteilhafterweise beispielsweise eine Zahnkrone erhalten werden kann.

Die Basis der Zahnersatz-Vorrichtung kann vorzugsweise Metall oder Metalllegierungen umfassen, wobei für die Herstellung der Basis insbesondere Kobalt, Nickel-Chrom-Legierungen, Titan, Titan-Legierungen und/oder Cobalt-Chrom-Legierungen verwendet werden. Es ist im Sinne der Erfindung bevorzugt, dass für die Herstellung der Zahnersatz-Vorrichtung Rohlinge bereitgestellt werden, aus denen die Elemente der Zahnersatz-Vorrichtung herausgefräst werden können. Es ist im Sinne der Erfindung insbesondere bevorzugt, für die Herstellung des Rohlings die Titan-Legierung Ti₆Al₄V zu verwenden. Es ist besonders bevorzugt, dass das für die Basis verwendete Material leicht zu fräsen ist oder dahingehend bearbeitet wird, dass das Fräsen erleichtert wird. Es ist im Sinne der Erfindung besonders bevorzugt, dass das Abutment und/oder die Basis der Zahnersatz-Vorrichtung eine Kobalt-Chrom-Legierung (CoCr) umfasst, die 62 Masseprozent Kobalt, 28 Masseprozent Chrom und 10 Masseprozent Wolfram enthält. Es kann im Sinne der Erfindung auch bevorzugt sein, Wolfram oder Teile des Wolfram durch Molybdän zu ersetzen, um eine Legierung zu erhalten, die leichter zu bearbeiten ist.

Die Basis kann beispielsweise mit Hilfe von CNC-Maschinen aus Premill- und/oder Preface-Rohlingen hergestellt werden. Die Rohlinge werden im Sinne der Erfindung vorzugsweise auch als Ausgangskrone bezeichnet. Der Begriff "premill" bedeutet im Sinne der Erfindung bevorzugt, dass ein Vor- oder Prefräsen, also eine Vorbearbeitung des Rohlings, stattgefunden hat. Die Abkürzung CNC steht vorzugsweise für *computerized numerial control.* Der Fachmann weiß, wie eine solche CNC-Maschine gesteuert wird. Es ist bevorzugt, dass die CNC-Maschine die Rohlinge unter Verwendung von CAD- und/oder CAM-Methoden herstellt, wobei die Abkürzungen bevorzugt für *computer-aided design* und *computer-aided manufacturing* stehen.

Eine besonders bevorzugte Grundform der Zahnersatz-Vorrichtung ist in Figur 2 dieses Dokuments dargestellt, wobei die in Figur 2 dargestellte Zahnersatz-Vorrichtung insbesondere eine Basis und ein Interface umfasst, wobei das Interface unterhalb der noch zu bearbeitenden Basis angebracht vorliegen kann. Vorzugsweise sind Basis und Interface aus demselben Material und/oder aus einem Stück gefertigt, wobei die Basis und das Interface zusammen vorzugweise die den zu bearbeitenden Rohling bilden, aus dem die vorgeschlagene Zahnersatz-Vorrichtung hergestellt werden kann. Es ist im Sinne der Erfindung bevorzugt, sowohl den Vorsprung, der vorzugsweise unterhalb des Zylinders und/oder des Quaders angeordnet vorliegt, als auch die Außenfläche des Vorsprungs als Interface zu bezeichnen. Der Vorsprung ist vorzugsweise im Wesentlichen als Hohlzylinder ausgebildet, wobei in seinem Inneren vorzugsweise eine durchgehende Bohrung verlaufen kann. Der Vorsprung übernimmt im Sinne der Erfindung vorzugsweise die Funktionalität des unteren Bereichs eines Abutments konventioneller mehrteilig ausgebildeter Zahnersatz-Vorrichtungen, wobei sich die Mehrteiligkeit bei den konventionellen Zahnersatz-Vorrichtungen insbesondere aus der Vorsehung der Bestandteile Basis und Abutment ergibt, die mit den oben genannten Nachteilen verbunden sein kann.

Es war vollkommen überraschend, dass mit dem vorgeschlagenen Verfahren eine Zahnersatz-Vorrichtung bereitgestellt werden kann, bei der die Basis der Zahnersatz-Vorrichtung einteilig aus einem Rohling herausgefräst wird. Der Begriff der "Einteiligkeit" bedeutet im Sinne der Erfindung bevorzugt, dass die Zahnersatz-Vorrichtung eine Basis umfasst, die ohne Abutment ausgebildet ist, wobei die Basis ein Interface umfasst, mit dem die Zahnersatz-Vorrichtung mit einem Dentalimplantat verbindbar ist. Es ist im Sinne der Erfindung insbesondere bevorzugt, dass die Abwesenheit eines Abutments als einteilige Ausbildung der Basis der Zahnersatz-Vorrichtung bezeichnet wird. Aufgrund der Abwesenheit eines Abutments zwischen Zahnersatz-Vorrichtung und Implantat entstehen keine unerwünschten Spalte in der Zahnersatz-Vorrichtung, die als Brutherd für Bakterien oder Ansammlungsort für Speisereste dienen können.

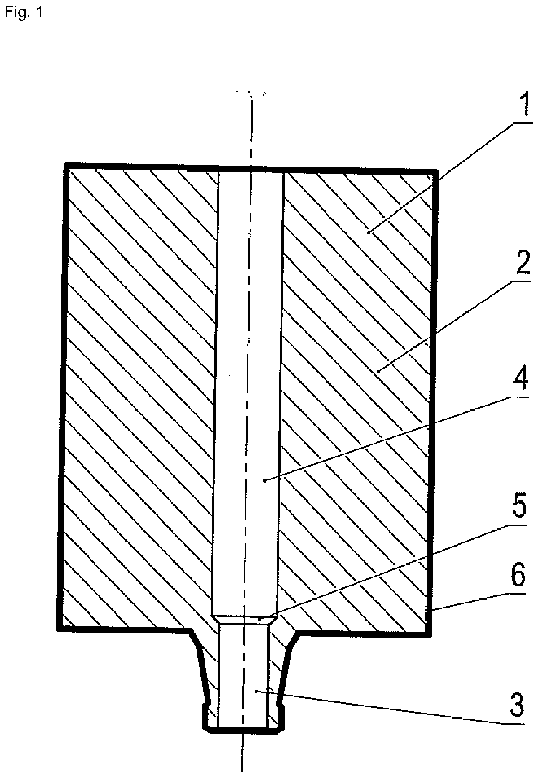

Auf die Vorsehung eines Abutments kann insbesondere durch die Vorsehung einer Schutzschicht verzichtet werden. Es ist im Sinne der Erfindung bevorzugt, dass die Schutzschicht vor oder nach dem Fräsen des Rohlings auf den Rohling aufgebacht wird. Dabei ist es insbesondere bevorzugt, dass der Rohling im Wesentlichen vollflächig mit der Schutzschicht eingehüllt und/oder umhüllt wird. Ein solches Vorgehen ist insbesondere dann empfehlenswert, wenn die Schutzschicht vor dem Fräsen auf den Rohling aufgebracht wird. Eine bevorzugte vollflächige Aufbringung auf den Rohling ist beispielsweise in Figur 1 des vorliegenden Dokuments dargestellt. Die Figur 1 verdeutlicht auch die Abwesenheit eines Abutments, wobei Figur 1 insbesondere einen ungefrästen Rohling als Ausgangspunkt des vorgeschlagenen Herstellungsverfahrens zeigt. Dabei wird als Basis bevorzugt ein metallischer Zylinder oder Quader verwendet, der dann in einer CNC-Maschine gefräst werden kann. Es ist im Sinne der Erfindung bevorzugt, dass der ungefräste Rohling beziehungsweise die Basis des Rohlings im Inneren eine Bohrung umfasst, bei der es sich bevorzugt um eine durchgehende Bohrung handelt. Der Begriff "durchgehende Bohrung" beschreibt im Sinne der Erfindung bevorzugt eine Bohrung, die einen vollständig durchgängigen Hohlraum innerhalb der Basis des Rohlings darstellt, so dass beispielsweise eine Schraube oder ein Gegenstand in die spätere Zahnersatz-Vorrichtung eingebracht werden kann. Eine solche Schraube kann zum Beispiel dazu verwendet werden, um die spätere Zahnersatz-Vorrichtung mit dem Dentalimplantat zu verbinden.

Das vorgeschlagene Verfahren und die vorgeschlagene Zahnersatz-Vorrichtung sind insbesondere mit den folgenden Vorteilen verbunden:
- Der Übergang zwischen dem Dentalimplantat zur Zahnersatz-Vorrichtung ist durch eine hohe Präzision und einen dichten Abschluss zwischen den Bestandteilen charakterisiert. Dies insbesondere deswegen, weil aufgrund der Schutzschicht auf einen Sandstrahl-, Polier- und/oder sonstigen Vorgang zur Entfernung unerwünschter Oxidschichten verzichtet werden kann.
- Bei der Verwendung der vorgeschlagenen Zahnersatz-Vorrichtung treten im Wesentlichen keine Zwischenräume innerhalb der Zahnersatz-Vorrichtung und gegenüber dem Dentalimplantat auf, in denen sich Bakterien und Speisereste ansammeln können.
- Die vorgeschlagene Zahnersatz-Vorrichtung weist vorteilhafterweise einen hohen Kompaktheitsgrad der Verbindung zwischen dem Dentalimplantat und dem Interface der Basis der Zahnersatz-Vorrichtung auf.
- Insbesondere ist die vorgeschlagene Zahnersatz-Vorrichtung weniger komplex aufgebaut als konventionelle Zahnersatz-Vorrichtungen, was die Herstellung vereinfacht und zur Verlängerung der Lebensdauer der Vorrichtung beitragen kann.
- Die vorgeschlagene Zahnersatz-Vorrichtung weist eine erhöhte Haltbarkeit auf, wodurch die Anzahl der Auswechslungen einer Zahnersatz-Vorrichtung im Laufe des Lebens eines Patienten vorteilhafterweise reduziert werden kann.
- Aufgrund der Schutzschicht treten keine Oxidschichten beim Sintern der Zahnersatz-Vorrichtung auf.
- Die vorgeschlagene Zahnersatz-Vorrichtung verfügt über elektrisch isolierende Eigenschaften, so dass unerwünschte und als unangenehm empfundene Stromflüsse im Mundraum des Patienten wirksam unterbunden werden.
- Darüber hinaus ist die vorgeschlagene Zahnersatz-Vorrichtung einfach in der Anwendung und beim Einsetzen in ein Dentalimplantat.
- Die vorgeschlagene Zahnersatz-Vorrichtung weist eine besondere gute Korrosionsfestigkeit auf.

Das vorgeschlagene Verfahren umfasst den Schritt des Fräsens des Rohlings, wodurch die Basis der Zahnersatz-Vorrichtung erhalten wird. Durch das Fräsen kann die quaderförmige oder zylindrische Ausgangskrone dahingehend bearbeitet werden, dass die erzeugte Basis der Zahnersatz-Vorrichtung bereits der anatomischen Form eines menschlichen Zahns ähnelt. Diese Basis kann dann mit einem keramischen Material verbunden werden, das vorzugsweise die Krone bildet. Es ist insbesondere bevorzugt, dass die Basis der vorgeschlagenen Zahnersatz-Vorrichtung direkt mit einem keramischen Material zur Bildung einer Krone verbindbar ist. Es ist im Sinne der Erfindung insbesondere bevorzugt, dass das keramische Material der Krone eine Stärke von bis zu 5 mm aufweist, insbesondere eine Stärke in einem Bereich von 0,1 bis 5 mm, wobei vorzugsweise alle Werte zwischen 0,1 und 5 mm bevorzugt sind. Es ist im Sinne der Erfindung bevorzugt, dass diese Werte nach oben oder nach unten abweichen können, beispielsweise wenn es zu neuen Entwicklungen im Bereich der Zahnersatz-Vorrichtungen kommt, die derzeit noch nicht absehbar sind. Es ist insbesondere bevorzugt, dass die Basis nach dem Fräsen nicht mehr von einer Schutzschicht umhüllt ist. Dies gilt insbesondere dann, wenn die Schutzschicht vor dem Fräsen auf der Ausgangskrone vorlag, da die Schutzschicht und die äußeren Materialschichten der Ausgangskrone durch den Fräsvorgang abgetragen und/oder entfernt werden. Die Schutzschicht liegt vorzugsweise insbesondere im Bereich des Interfaces der Zahnersatz-Vorrichtung vor.

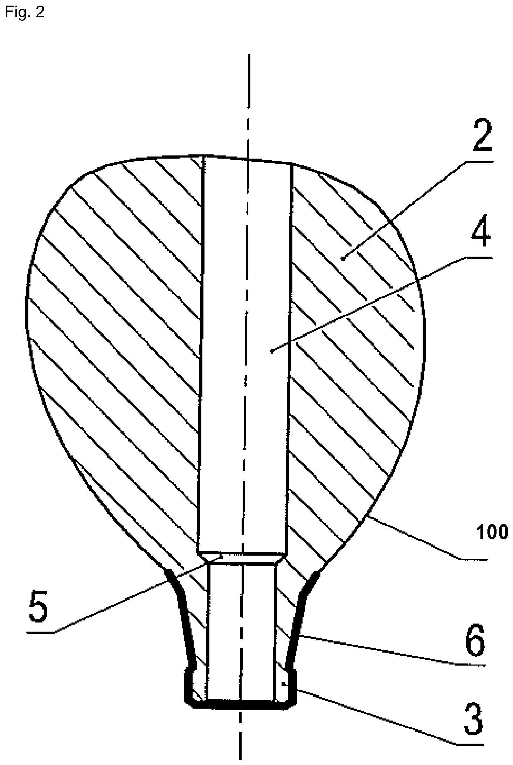

Es kann für andere Anwendungen auch bevorzugt sein, dass die Schutzschicht nach dem Fräsen auf den dann vorgefrästen Rohling aufgebracht wird. Es kann dann bevorzugt sein, dass die Schutzschicht insbesondere auf das Interface der Zahnersatz-Vorrichtung aufgebracht wird. Ein vorgefräster Rohling wird im Sinne der Erfindung bevorzugt als "pre-milled Rohling" bezeichnet. Figur 2 zeigt eine besonders bevorzugte Ausführungsform der Erfindung, die insbesondere nach dem Fräsen des Rohlings erhalten wird und bei der das Interface mit der Schutzschicht bedeckt vorliegt. Insbesondere wird durch die Schutzschicht das Auftreten von Potentialunterschieden zwischen Dentalimplantat und Zahnersatz-Vorrichtung wirksam vermieden, so dass es zu keinen unerwünschten Stromflüssen im Mundraum eines Patienten kommt. Dies ist insbesondere auf die vorteilhaften isolierenden elektrischen Eigenschaften der Schutzschicht und/oder der Materialien, aus denen sie zusammengesetzt ist, zurückzuführen.

Es ist im Sinne der Erfindung bevorzugt, dass der Rohling zur Herstellung der vorgeschlagenen Zahnersatz-Vorrichtung ein nicht-edles Metallumfasst. Ein nicht-edles Metall wird im Sinne der Erfindung bevorzugt auch als unedel bezeichnet und mit der Abkürzung NEM verwendet. Der Fachmann weiß, welche Metalle als nicht-edel eingestuft werden und wo sie im Periodensystem der Elemente zu finden sind. Es ist im Sinne der Erfindung insbesondere bevorzugt, dass der Rohling eine Legierung aus Chrom (Cr) und Cobalt (Co) umfasst, die im Sinne der Erfindung bevorzugt auch als CrCo-Legierung bezeichnet wird. Chrom-Cobalt-Legierungen sind vorzugsweise durch eine große Härte verbunden mit einer hohen Elastizität und einer schlechten Wärmeleitfähigkeit gekennzeichnet. Aufgrund der dadurch bedingten schlechten Zerspanbarkeit ist die Verarbeitung dieser Materialien sehr aufwändig und die verwendeten Werkzeuge sind einem hohen Verschleiß ausgesetzt, der dazu führt, dass die Fachwelt bisher davon ausgegangen war, dass Chrom-Cobalt-Legierungen nicht für Massenprodukte, wie Rohlinge zur Herstellung von Zahnersatz-Vorrichtungen verwendet werden können. Ein weiterer Grund, der bisher von einer solchen Massen-Verwendung abgehalten hat, ist der hohe Preis des Materials. Überraschenderweise weist das besonders bevorzugte CrCo-Material eine besonders hohe Korrosionsresistenz aus und ist insbesondere biokompatibel. Die Korrosionsresistenz macht den Einsatz der CoCr-Legierung insbesondere für den Einsatz im Mundraum besonders geeignet. Besonders vorteilhaft ist die Verwendung von Co-Cr-Legierungen, da der Wärmeausdehnungskoeffizient des CrCo-Materials in einer ähnlichen Größenordnung wie der Wärmeausdehnungskoeffizient des vorzugsweise zu Verblendungszwecken eingesetzten Keramikmaterials liegt. Dadurch wird das Auftreten von inneren Spannungen innerhalb der Zahnersatz-Vorrichtung überraschend wirksam vermindert und der Gefahr von unerwünschten Keramikrissen effektiv begegnet. Insbesondere wird der Verblendungsprozess, d.h. die Herstellung der Verbindung zwischen Krone und Keramik-Verblendung, aufgrund der ähnlichen Wärmeausdehnungskoeffizienten der beteiligten Materialien wesentlich erleichtert.

In einem weiteren Aspekt betrifft die Erfindung vorzugsweise ein System umfassend eine vorgeschlagene Zahnersatz-Vorrichtung und ein Dentalimplantat, wobei eine Schutzschicht auf dem Interface der Zahnersatz-Vorrichtung dazu eingerichtet ist, einen Fluss eines elektrischen Stroms zwischen dem Dentalimplantat und der Zahnersatz-Vorrichtung zu unterbinden. Es ist im Sinne der Erfindung bevorzugt, dass ein Kontakt zwischen dem Interface der Zahnersatz-Vorrichtung und dem Dentalimplantat besteht, wobei insbesondere die Schutzschicht, die auf dem Interface angeordnet vorliegt, in direktem Kontakt mit dem Implantat vorliegt. Es ist im Sinne der Erfindung ganz besonders bevorzugt, dass die Schutzschicht eine Grenzschicht zwischen Dentalimplantat und der Zahnersatz-Vorrichtung darstellt, wobei die Schutzschicht auf dem Interface der Zahnersatz-Vorrichtung angeordnet ist. Somit verhindert die Schutzschicht einen direkten Kontakt zwischen den Materialien, aus denen das Dentalimplantat auf der einen Seite und die Zahnersatz-Vorrichtung auf der anderen Seite gefertigt sind. Durch die Verhinderung des direkten Kontakts zwischen den Materialien kann ein etwaiger Potentialunterschied zwischen den Materialien nicht ausgeglichen werden, so dass ein Stromfluss, der einen solchen Ausgleich bewirken könnte, unterbunden wird. Tests haben gezeigt, dass auch schon sehr dünne Schichten des Beschichtungsmaterials ausreichen, um einen unerwünschten Stromfluss zwischen Dentalimplantat und der Zahnersatz-Vorrichtung, insbesondere dem Interface, wirksam zu verhindern.

Durch die Vorsehung der Schutzschicht wird darüber hinaus die Entstehung von unerwünschten Oxidschichten vermieden, wenn die in Figur 2 dargestellte Grundform einer besonders bevorzugten Ausführungsform der Erfindung mit einem keramischen Material zur Bildung einer Krone versehen wird. Dieses keramische Material wird vorzugsweise in einem Sinterofen gesintert, wobei dazu die Zahnersatz-Vorrichtung als Ganzes in den Sinterofen eingebracht wird. Dabei kommt es zur Bildung von unerwünschten Oxidschichten in den Bereichen der Zahnersatz-Vorrichtung, die nicht von einem keramischen Material bedeckt sind. Die Schutzschicht verhindert besonders wirksam eine Oxidbildung in den freiliegenden Bereichen der Zahnersatz-Vorrichtung im Sinterofen. Da auf diese Weise unerwünschte Oxidschichten gar nicht mehr entstehen, müssen diese auch nicht mehr entfernt werden, wodurch ein unerwünschtes Sandstrahlen und/oder Nachbearbeiten der Zahnersatz-Vorrichtung mit den oben genannten Nachteilen hinsichtlich der Präzession des Interfaces und der Glattheit deren Oberfläche dann nicht mehr erforderlich ist.

In einer bevorzugten Ausführungsform der Erfindung ist die Schutzschicht dünner als 0,1 mm, bevorzugt dünner als 0,01 mm, besonders bevorzugt dünner als 1 µm und am meisten bevorzugt dünner als 0,1 µm. Es ist im Sinne der Erfindung ganz besonders bevorzugt, dass die Schutzschicht eine Stärke in einem Bereich von 0,001 µm bis 0,1 mm aufweist. Es war vollkommen überraschend, dass bereits dünne Schutzschichten mit einer bevorzugten Dicke von beispielsweise kleiner als 0,1 µm ausreichen, um die Bildung der Oxidschichten wirksam zu verhindern. Dies konnte durch Tests festgestellt werden. Es war überraschend, dass selbst eine dünne Schutzschicht in der Lage ist, die oben genannten Vorteile der Erfindung zu verwirklichen, zum Beispiel auch unerwünschte Stromflüsse zwischen Dentalimplantat und Zahnersatz-Vorrichtung wirksam zu unterbinden.

Es ist im Sinne der Erfindung bevorzugt, dass die Schutzschicht mit einem *Atomic Layer Deposition-*Verfahren*,* einer Methode der Vakuumbedampfung und/oder durch ein chemisches und/oder plasmachemisches Abscheideverfahren auf den Rohling aufgebracht wird. Es ist im Sinne der Erfindung bevorzugt, dass das vorgeschlagene Verfahren den Schritt der Aufbringung der Schutzschicht auf den Rohling umfasst, wobei das Aufbringungsverfahren ausgewählt ist aus einer Gruppe umfassend *Atomic Layer Deposition-*Verfahren*,* Vakuumbedampfung, chemisches und/oder plasmachemisches Abscheideverfahren. Vorzugsweise kann für die Methode der *Atomic Layer Deposition* auch der Begriff der Atomschichtabscheidung verwendet werden. Es kann im Sinne der Erfindung bevorzugt sein, dass der Rohling beispielsweise in eine Bedampfungskammer eingebracht wird in der vorzugsweise ein Vakuum vorliegen kann oder die mit einem Schutzgas, beispielsweise einem reaktionsträgen Edelgas, gefüllt sein kann, um unerwünschte Reaktionen der aufzubringenden Schutzschicht, sowie die Entstehung von unerwünschten Oxidschichten zu verhindern.

In einer bevorzugten Ausführungsform der Erfindung umfasst die Schutzschicht mindestens ein Metalloxid, wobei das Metalloxid ausgewählt ist aus einer Gruppe umfassend Al₂O₃, Al₂O₃/TiO₂, Al₂O₃/Ta₂O₅, Al₂O₃/HfO₂ und/oder einer Mischung daraus. Es ist im Sinne der Erfindung insbesondere bevorzugt, dass die Schutzschicht beziehungsweise das Material der Schutzschicht elektrisch isolierende Eigenschaften aufweist. Es ist ferner bevorzugt, dass die Schutzschicht einen Zusatz umfasst, wobei der Zusatz ausgewählt ist aus einer Gruppe umfassend ZrO₂ und/oder SnO₂. Es ist im Sinne der Erfindung bevorzugt, dass der Zusatz insbesondere den Aufbringungsprozess des Metalloxids erleichtert, sowie die Haftung der Schutzschicht am Rohling verbessert.

Es ist im Sinne der Erfindung am meisten bevorzugt, dass die Zahnersatz-Vorrichtung eine Schutzschicht umfassend Aluminiumoxid (Al₂O₃) umfasst, wobei die Schutzschicht bevorzugt umfassend Al₂O₃ mit dem Verfahren der Atomschichtabscheidung aufgebracht wird. Tests haben gezeigt, dass diese Kombination aus Material und Aufbringungsmethode die besten Ergebnisse hinsichtlich der zu erreichenden Vorteile und technischen Wirkungen gewährleistet.

Es ist im Sinne der Erfindung bevorzugt, dass die im Kontext der Erfindung eingesetzten Metalle und Legierungen insbesondere biokompatibel sind und darüber hinaus einen thermischen Ausdehnungskoeffizienten aufweisen, der sich vorzugsweise nicht wesentlich vom Wärmeausdehnungskoeffizienten des keramischen Materials unterscheidet, das bevorzugt zur Bildung der Zahnkrone verwendet wird. Dadurch wird vorteilhafterweise erreicht, dass das keramische Material nicht von der Basis der Zahnersatz-Vorrichtung, insbesondere der Karkasse, abgleitet. Es ist ganz besonders bevorzugt, dass die Wärmeausdehnungskoeffizienten der eingesetzten Metalle und Metalllegierungen in der vorgeschlagenen Zahnersatz-Vorrichtung ähnlich oder im Wesentlichen gleich zum Wärmeausdehnungskoeffizienten des keramischen Materials sind.

Es ist in einer Ausführungsform der Erfindung bevorzugt, dass die Zahnersatz-Vorrichtung ein keramisches Material zur Bildung einer Krone umfasst. Als Krone können beispielsweise Keramikverblendungen oder keramisches Material verwendet werden, wobei es im Sinne der Erfindung insbesondere bevorzugt ist, dass das keramische Material im Rahmen des Herstellungsprozesses gesintert wird. Es ist im Sinne der Erfindung bevorzugt, dass das keramische Material bevorzugt auch als "Keramik" bezeichnet wird. Das keramische Material kann beispielsweise ein Verblendkunststoff auf Komposit-Basis sein, wobei damit im Sinne der Erfindung vorzugsweise eine Mischung aus einer Harzmatrix und einem keramischen Füllstoff gemeint ist. Es kann ebenso bevorzugt sein, dass eine Verblend-Metall-Keramik verwendet wird. Insbesondere umfasst die Krone ein keramisches Material, wobei die Krone auch andere Materialien umfassen kann, die beispielsweise ausgewählt sind aus einer Gruppe umfassend Goldlegierung, goldreduzierte Legierung, Titan, edelmetallfreie Legierungen und/oder Nichtedelmetalllegierung (NEM), wobei die genannten Materialien vorzugsweise biokompatibel vorliegen. Nichtedelmetalllegierung werden im Sinne der Erfindung vorzugsweise auch als nicht-edle Metalle bezeichnet. Im Stand der Technik sind ferner Vollkeramikkronen bekannt, die anstatt eines Metallgerüsts eine Basis aufweisen, die überbrannt werden kann. Es ist im Sinne der Erfindung bevorzugt, dass eine Basis auf einem CNC-Bohr- und Fräswerk beispielsweise aus Zirkonoxid gefräst und anschließend mit einer Keramik verblendet werden kann.

Die Krone stellt vorzugsweise den oberen Teil der Zahnersatz-Vorrichtung dar, wobei sich die Bezeichnungen und Raumorientierungen "oben" und "unten" an den Bezeichnungen "Oberkiefer" und "Unterkiefer" orientieren. Es ist im Sinne der Erfindung bevorzugt, dass ein oberer Teil der Zahnersatz-Vorrichtung, insbesondere die Krone, beispielsweise oberhalb des unteren Teils der Zahnersatz-Vorrichtung angeordnet vorliegt, der beispielsweise von dem Interface der Zahnersatz-Vorrichtung gebildet wird. Der durchschnittliche Fachmann weiß, dass diese Zuordnung insbesondere dann greift, wenn die Zahnersatz-Vorrichtung in den Unterkiefer eingebracht wird.

Es ist in einer Ausführungsform der Erfindung bevorzugt, dass die Zahnersatz-Vorrichtung ein keramisches Material zur Bildung einer Krone umfasst, wobei das keramische Material der Krone vorzugsweise eine Stärke von bis zu 5 mm aufweist, insbesondere eine Stärke in einem Bereich von 0,1 bis 5 mm. Wie alle Zahlen im Kontext der Erfindung können diese Werte nach oben oder nach unten abweichen, beispielsweise wenn es zu neuen Entwicklungen im Bereich der Zahnersatz-Vorrichtungen kommt, die derzeit noch nicht absehbar sind. Es ist ferner bevorzugt, wenn die vorgeschlagene Zahnersatz-Vorrichtung Bestandteil einer Zahnkrone, einer Brücke, einer Balkenkonstruktion, einer Stützkonstruktion für eine Brücke und/oder einer anderen Zahnersatz-Vorrichtung ist. Die Brücken können beispielsweise einschraubbare Brücken sein. Ferner kann die Zahnersatz-Vorrichtung ein Steg sein. Vorzugsweise umfasst die vorgeschlagene Zahnersatz-Vorrichtung ein Abutment, aber es kann für andere Anwendungen auch bevorzugt sein, dass die Zahnersatz-Vorrichtung kein Abutment umfasst. Es kann ebenso bevorzugt sein, dass die Zahnersatz-Vorrichtung eine langgestreckte Zahnbrückenprothese umfasst. Es ist im Sinne der Erfindung bevorzugt, dass insbesondere die Basis der Zahnersatz-Vorrichtung mit der keramischen Masse zur Bildung einer Krone überzogen vorliegt, nicht aber das Interface, das vorzugsweise den unteren Bereich der Zahnersatz-Vorrichtung bildet und die Verbindung zum Dentalimplantat sicherstellt. Die Erfindung betrifft in einem weiteren Aspekt eine Zahnkrone umfassend eine vorgeschlagene Zahnersatz-Vorrichtung und ein keramisches Material.

Wenn die Zahnersatz-Vorrichtung ein keramisches Material umfasst, ist es im Sinne der Erfindung bevorzugt, dass die Zahnersatz-Vorrichtung während des Herstellungsprozesses gesintert wird. Mit anderen Worten: in dieser bevorzugten Ausführungsform der Erfindung umfasst das vorgeschlagene Verfahren den Verfahrensschritt des Sinterns der Zahnersatz-Vorrichtung beziehungsweise das Sintern des keramischen Materials. Es kann insbesondere bevorzugt sein, den Rohling zu sintern, auf dem das keramische Material aufgebracht wurde, wobei das keramische Material insbesondere auf die Basis der Zahnersatz-Vorrichtung aufgebracht wird. Das Sintern kann vorzugsweise in einem dafür vorgesehenen Sinterofen erfolgen. Es kann bevorzugt sein, dass das keramische Material in mehreren Schichten aufgetragen wird und/oder dass das Sintern in einzelnen Sinter-Schritten erfolgt. Es ist insbesondere bevorzugt, dass das Sintern bei Temperaturen in einem Bereich von 600 bis 1200 ° C erfolgt, wobei in Abhängigkeit des verwendeten keramischen Materials auch andere Temperaturen bevorzugt sein können. Zum Sintern der Zahnersatz-Vorrichtung sind insbesondere alle Temperatur-Werte zwischen 600 und 1200 ° C bevorzugt. Es kann im Sinne der Erfindung bevorzugt sein, dass sich weitere Temperaturregime als geeignet erweisen, um eine Zahnersatz-Vorrichtung gemäß der vorliegenden Erfindung zu erhalten, beispielsweise wenn anderen Keramikmaterialien verwendet werden.

Für einige Anwendungen der vorgeschlagenen Zahnersatz-Vorrichtung kann es auch bevorzugt sein, dass die Zahnersatz-Vorrichtung ein Abutment umfasst. Es ist in dieser Ausführungsform der Erfindung bevorzugt, dass das Abutment Titan und/oder eine Titan-Legierung umfasst. Es kann im Sinne der Erfindung bevorzugt sein, dass das Abutment in seinem Inneren eine Bohrung umfasst, bei der es sich bevorzugt um eine durchgehende Bohrung handelt. Vorzugsweise kann das Abutment ein Außengewinde umfassen, mit dem die Zahnersatz-Vorrichtung in das Implantat eingeschraubt werden kann, wobei das Implantat in diesem Fall vorzugsweise ein Innengewinde umfasst, das vorzugsweise zur Aufnahme des Außengewindes des Abutments eingerichtet ist. Es ist insbesondere bevorzugt, dass das Abutment einen Vorsprung umfasst, der vorzugsweise den Übergang zwischen einem oberen Bereich des Abutments und einem unteren Teil des Abutments markiert. Der obere Teil des Abutments liegt vorzugsweise eingehüllt von der Basis der Zanersatz-Vorrichtung vor, während der untere Teil des Abutments das Interface der Zahnersatz-Vorrichtung bilden kann, mit dem die Zahnersatz-Vorrichtung an dem Dentalimplantat befestigt wird. Der Vorsprung stellt vorzugsweise die breiteste Stelle des Abutments dar und sorgt vorteilhafterweise für einen sicheren Halt der Basis auf dem oberen Bereich des Abutments. Die Wechselwirkung zwischen Abutment, Interface und Dentalimplantat und ihre Anordnung zueinander wird insbesondere in den Figuren 5 bis 7 dieses Dokuments verdeutlicht. Es ist im Sinne der Erfindung insbesondere bevorzugt, dass das Abutment zwischen der Krone und dem Implantat angeordnet vorliegt oder mit anderen Worten ein Verbindungselement zwischen Krone und dem Implantat darstellt. Vorzugweise ragt der obere Bereich des Abutments in die Zahnersatz-Vorrichtung hinein und wird von der Basis, die bevorzugt die Krone trägt, umschlossen und/oder umhüllt. Der untere Teil des Abutments bildet bevorzugt das Interface, welches vorzugsweise dem Detalimplantat zugewandt ist und beispielsweise in eine Öffnung des Detalimplantats zu Befestigungszwecken eingeführt werden kann.

In einem weiteren Aspekt betrifft die Erfindung eine Zusammensetzung umfassend ein Metalloxid, wobei das Metalloxid ausgewählt ist aus einer Gruppe umfassend Al₂O₃, Al₂O₃/TiO₂, Al₂O₃/Ta₂O₅, Al₂O₃/HfO₂oder einer Mischung daraus. Es ist insbesondere bevorzugt, dass die Zusammensetzung als Schutzschicht zur Aufbringung auf eine Zahnersatz-Vorrichtung verwendet wird. Es kann jedoch ebenso bevorzugt sein, die Zusammensetzung für andere Zwecke zu verwenden. Die Zusammensetzung und/oder die Beschichtung können die Zahnersatz-Vorrichtung, insbesondere die metallischen Bestandteile, im Wesentlichen vollständig umhüllen. Es ist aber am meisten bevorzugt, wenn die Schutzschicht umfassend die vorgeschlagene Zusammensetzung insbesondere das Interface der Zahnersatz-Vorrichtung bedeckt. Vorzugsweise kann die Zusammensetzung Zusätze, wie zum Beispiel ZrO₂ und/oder SnO₂, umfassen.

Die Erfindung wird durch die nachfolgenden Figuren näher beschrieben; es zeigt:
- Figur 1: Darstellung einer bevorzugten Ausführungsform des Rohlings
- Figur 2: Darstellung einer bevorzugten Ausführungsform einer Grundform der Zahnersatz-Vorrichtung
- Figur 3: Darstellung einer bevorzugten Ausführungsform der Zahnersatz-Vorrichtung mit einem keramischen Material
- Figur 4: Darstellung einer bevorzugten Ausführungsform der Zahnersatz-Vorrichtung
- Figur 5: Darstellung einer bevorzugten Ausführungsform der Zahnersatz-Vorrichtung mit Abutment
- Figur 6: Darstellung einer bevorzugten Ausführungsform eines Abutments
- Figur 7: Darstellung einer bevorzugten Ausführungsform eines Abutments, das in einem Dentalimplantat vorliegt
- Figur 8: Darstellung einer bevorzugten Ausführungsform der Zahnersatz-Vorrichtung als Teil einer Brücke
- Figur 9: Darstellung einer bevorzugten Ausführungsform der Zahnersatz-Vorrichtung als Teil einer Brücke

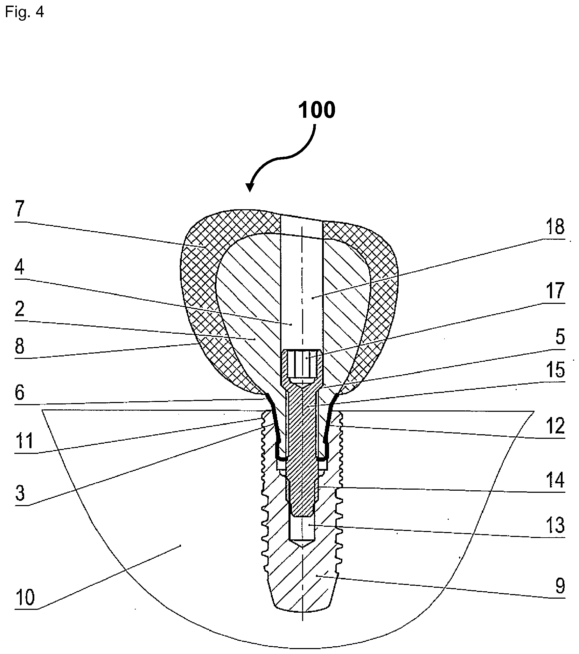

Figur 1 zeigt eine Ansicht eines Ausgangsrohlings (1) als Ausgangspunkt des vorgeschlagenen Herstellungsverfahrens. Der Ausgangsrohling (1) kann beispielsweise von einem quaderförmigen oder zylindrischen Metallkörper gebildet werden, wobei insbesondere Titan und/oder eine Titan-Legierung für die Herstellung der Ausgangskrone (1) verwendet werden. Es ist im Sinne der Erfindung insbesondere bevorzugt, dass die Ausgangskrone (1) die Basis (2) für die Zahnersatz-Vorrichtung (100) bildet, wobei die Basis (2) insbesondere durch einen Fräsvorgang aus der Ausgangskrone (1) herausgearbeitet werden kann. Es ist bevorzugt, dass die Basis (2) durch den Fräsvorgang eine Form erhält, die bereits der anatomischen Form des zu ersetzenden Zahns ähnelt. Die Ausgangskrone (1) umfasst einen Vorsprung (3), der vorzugsweise unterhalb des bevorzugt quaderförmigen oder zylindrischen Metallkörpers angeordnet vorliegt und der vorzugsweise das Interface (3) der Zahnersatz-Vorrichtung (100) gegenüber dem Dentalimplantat (9, dargestellt ab Figur 4) bildet. Es ist im Sinne der Erfindung bevorzugt, dass Basis (2) und Interface (3) der Zahnersatz-Vorrichtung (100) aus demselben Material gefertigt sind. Es ist ferner bevorzugt, dass sich die Basis (2) in das Interface (3) hinein erstreckt. Es ist darüber hinaus bevorzugt, dass ein Vorsprung (3) der Basis (2) das Interface (3) der Zahnersatz-Vorrichtung (100) bildet.

Der Ausgangsrohling (1), der in Figur 1 dargestellt ist, weist ferner eine Bohrung (4) auf, die vorzugsweise als durchgehende Bohrung (4) ausgebildet ist. Es ist im Sinne der Erfindung bevorzugt, die Bohrung (4) vorzugsweise auch als "Schraubkanal" oder "Schraubschacht" zu bezeichnen. Vorzugsweise ist die Bohrung (4) dazu eingerichtet, die Befestigung der Zahnersatz-Vorrichtung (100) an das Dentalimplantat (9) zu gewährleisten, wobei das Dentalimplantat (9) vorzugsweise im Kiefer (10, dargestellt in Figur 4) eines Patienten, der eine Zahnersatz-Vorrichtung (100) bekommen soll, angeordnet vorliegt.

Die Bohrung (4) verengt sich beim Übergang von der Basis (2) in das Interface (3), wobei dieser Übergang und/oder die Verengung von einem Vorsprung (5) gebildet werden wird. Der Vorsprung (5) ist vorzugsweise zur Fixierung einer Schraube (15, dargestellt ab Figur 4) im Schraubkanal (4) eingerichtet, wobei die Schraube (15) insbesondere einen Schraubenkopf (17) aufweist.

Der Ausgangsrohling (1) kann vorzugsweise im Wesentlichen vollständig mit einer Schutzschicht (6) überzogen sein, die im Sinne der Erfindung bevorzugt auch als Beschichtung oder als Überzug bezeichnet wird. Es ist insbesondere bevorzugt, dass vor dem Fräsen sowohl die Basis (2), als auch das Interface (3) mit der Schutzschicht (6) überzogen sind. Vorzugsweise weist die Schutzschicht (6) eine Stärke in einem Bereich von 0,001 µm bis 0,1 mm auf und umfasst ein Metalloxid oder eine Kombination von Metalloxiden mit elektrisch isolierenden Eigenschaften. Es kann beim Aufbringungsprozess der Schutzschicht (6) vorkommen, dass sich ein Film der Schutzschicht (6) beim Aufbringungsprozess auch innerhalb der Bohrung (4) bildet. Um dies zu verhindern, können verschiedene Maßnahmen ergriffen werden. Es kann beispielsweise bevorzugt sein, die Öffnung (4) während des Aufbringens der Schutzschicht (6) mit einer Flüssigkeit, zum Beispiel einem Öl, zu füllen, so dass das Material, aus dem die Schutzschicht (6) besteht, nicht in die Bohrung (4) eindringen kann.

Figur 2 zeigt eine Grundform einer möglichen bevorzugten Ausführungsform der Zahnersatz-Vorrichtung (100). Die in Figur 2 dargestellte Grundform liegt insbesondere nach dem Fräsen des Rohlings (1) vor, wobei die Basis (2) durch das Fräsen eine Form erhalten hat, die näher an der Form des zu ersetzenden Zahns liegt als die quaderförmige oder zylindrische Form des Ausgangsrohlings (1). Es ist insbesondere bevorzugt, dass ein Teil des Ausgangsrohlings (1), insbesondere die äußeren Schichten des Ausgangsrohlings (1), durch das Fräsen entfernt wird. Dadurch wird insbesondere auch die Schutzschicht (6) im Bereich der Basis (2) entfernt, so dass bei der in Figur 2 dargestellten Grundform der Zahnersatz-Vorrichtung (100) die Beschichtung (6) vorzugsweise im Wesentlichen im Bereich des Interfaces (3) vorliegt. Es ist insbesondere bevorzugt, dass die Schutzschicht (6) auf einer Außenseite des Interfaces (3) angeordnet vorliegt, d.h. vorzugsweise auf dem Bereich der Zahnersatz-Vorrichtung (100), der mit dem Implantat (9) in Kontakt gelangt, wenn die Zahnersatz-Vorrichtung (100) in ein Dentalimplantat (9) im Kiefer (10, dargestellt in Figur 4) eines Patienten eingeführt und/oder darin befestigt wird.

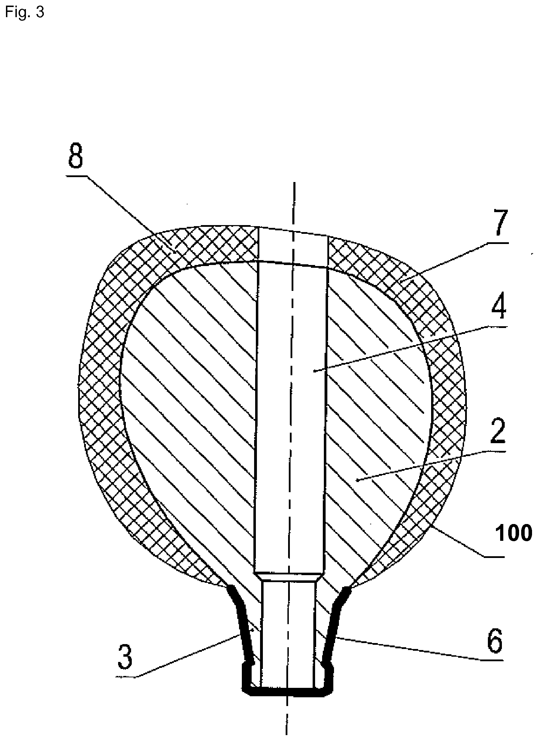

Figur 3 zeigt eine Darstellung einer bevorzugten Ausführungsform der Zahnersatz-Vorrichtung (100) mit einem keramischen Material (7). Es ist im Sinne der Erfindung bevorzugt, dass die in Figur 2 gezeigt Grundform der Zahnersatz-Vorrichtung (100) mit einem keramischen Material (7) versehen werden kann, wodurch vorteilhafterweise eine Zahnkrone (8) erhalten wird. Es ist bevorzugt, dass das keramische Material (7) so in der Form angepasst werden kann, dass die Zahnkrone (8) im Wesentlichen der Form eines zu ersetzenden Zahnes entspricht. Es ist im Sinne der Erfindung bevorzugt, dass die Zahnkrone (8) eine vorgeschlagene Zahnersatz-Vorrichtung (100) und ein keramisches Material (7) umfassen kann. Vorzugsweise umhüllt das keramische Material (7) die Basis (2) der Zahnersatz-Vorrichtung (100), wobei die Basis (2) vorzugsweise vorgefräst (pre-milled) vorliegt. Es ist im Sinne der Erfindung bevorzugt, dass das keramische Material (7) nach seiner Aufbringung auf die vorzugsweise vorgefräste Basis (2) der Zahnersatz-Vorrichtung (100) gesintert wird. Die Schutzschicht (6) liegt vorzugsweise als dünner Film auf dem Interface (3) der Zahnersatz-Vorrichtung (100) vor.

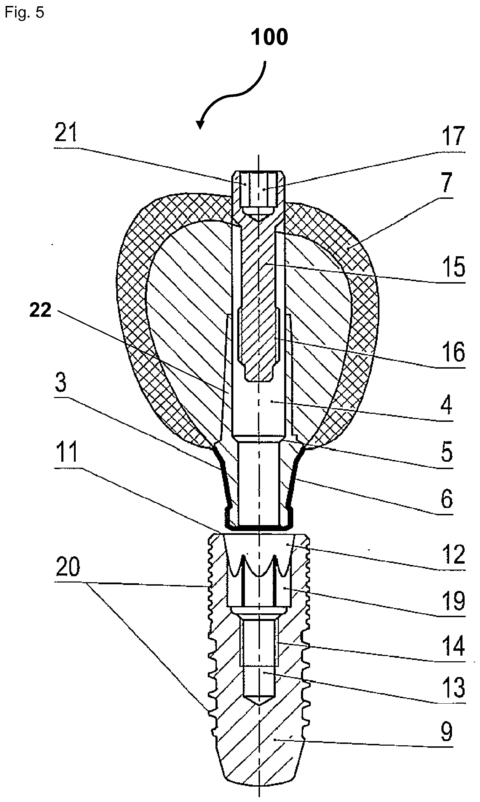

Figur 4 zeigt eine Darstellung einer bevorzugten Ausführungsform derZahnersatz-Vorrichtung (100), insbesondere in einer Ausführungsform mit keramischem Material (7) zur Bildung einer Zahnkrone (8). Figur 4 zeigt, wie die Zahnersatz-Vorrichtung (100) in einem Dentalimplantat (9) eingesetzt sein kann, wobei das Dentalimplantat (9) vorzugsweise im Kieferknochen (10) eines Patienten vorliegen kann. Das Dentalimplantat (9) kann eine Blindbohrung (13) zur Aufnahme einer Schraube (15) zur Befestigung der Zahnersatz-Vorrichtung (100) umfassen, wobei die Schraube (15) vorzugsweise ein Schraubgewinde (14) und einen Schraubenkopf (17) umfassen kann. Die Schraube (15) kann in den Schraubkanal (4) der Zahnersatz-Vorrichtung (100) eingebracht sein, wobei der Vorsprung (5) des Schraubkanals (4) den Schraubenkopf (17) der Schraube (15) hält. Es ist bevorzugt, dass das Dentalimplantat (9) eine Vertiefung (12) umfasst, die der Aufnahme der Schraube (15) dient. Es ist im Sinne der Erfindung bevorzugt, dass die Vertiefung (12) in einer oberen Stirnfläche (11) des Dentalimplantats (9) vorliegt. Es ist darüber hinaus bevorzugt, dass eine Form der Vertiefung (12) der äußeren Form des Interfaces (3) der Zahnersatz-Vorrichtung entspricht (100). Ferner kann das Dentalimplantat (9) ein Außengewinde (20, dargestellt in Figur 5) umfassen, wobei das Dentalimplantat (9) mit dem Außengewinde (20) in den Kieferknochen (10) eines Patienten eingeschraubt werden kann. Der obere Teil des Schraubkanals (4) kann mit einem Füllmaterial (18) gefüllt werden, das im Sinne der Erfindung vorzugsweise auch als Plombenmaterial (18) bezeichnet wird.

Figur 5 zeigt, wie eine Zahnersatz-Vorrichtung (100) in ein Dentalimplantat (9) eingebracht werden kann. Dazu umfasst das in Figur 5 dargestellte Dentalimplantat (9) eine Erweiterung (19), wobei die Erweiterung (19) insbesondere eine Erweiterung der Vertiefung (12) des Dentalimplantats (9) darstellt. Es ist insbesondere bevorzugt, wenn die Erweiterung (19) eine Verbreiterung der Vertiefung (12) in Sechskantform darstellt. Die in Figur 5 dargestellte bevorzugte Ausführungsform der Zahnersatz-Vorrichtung (100) umfasst insbesondere ein Abutment (22), das vorzugsweise zwischen Dentalimplantat (9) und Zahnersatz-Vorrichtung (100) angeordnet ist. Es ist im Sinne der Erfindung bevorzugt, dass das Abutment (22) ein Zwischenstück darstellt, das vorzugsweise zwischen Zahnersatz-Vorrichtung (100) und Dentalimplantat (9) vorliegen kann. Es ist im Sinne der Erfindung bevorzugt, dass der untere Teil des Abutments (22) in das Dentalimplantat (9) eingeführt werden kann, wobei es im eingeführten Zustand insbesondere in der Vertiefung (12) und in der Erweiterung (19) des Dentalimplantats (9) vorliegt. Der obere Teil des Abutments (22) liegt in der Basis (2) der Zahnersatz-Vorrichtung (100) angeordnet vor. Wie in Figur 5 dargestellt, ist der untere Teil des Abutments (22) vorzugsweise mit der Schutzschicht (6) versehen. Diese Schutzschicht (6) sorgt vorteilhafterweise insbesondere für eine elektrische Isolierung zwischen dem Dentalimplantat (9) und der Zahnersatz-Vorrichtung (100). Es ist im Sinne der Erfindung ganz besonders bevorzugt, dass ein Kontakt besteht zwischen dem mit der Schutzschicht (6) beschichteten Interface (3) der Zahnersatz-Vorrichtung (100) und dem Dentalimplantat (9).

Im Inneren des Abutments (22) liegt ein Schraubkanal (4) beziehungsweise eine durchgehende Bohrung (4) zur Aufnahme einer Befestigungsschraube (15) vor. Es sind neben Schrauben (15) auch alternative Befestigungsmittel denkbar. Es ist im Sinne der Erfindung bevorzugt, dass die Schraube (15) aus der in Figur 5 dargestellten Position weiter nach unten geschoben wird, bis sie in der in Figur 4 dargestellten Position vorliegt und die Befestigungswirkung erzielt. Vorzugsweise weist die Schraube (15) ein vorzugsweise außenliegendes Schraubgewinde (16) auf, das mit dem Dentalimplantat (9) in Eingriff gelangen kann, wodurch vorteilhafterweise eine Verbindung zwischen Dentalimplantat (9) und Zahnersatz-Vorrichtung (100) erhalten wird. Es ist im Sinne der Erfindung bevorzugt, dass die Schraube (15) mit dem Schraubgewinde (16) in die durchgehende Bohrung (4) der Zahnersatz-Vorrichtung (100) eingesetzt und in das Schraubgewinde (14) der Bohrung (13) des Dentalimplantats (9) eingeschraubt wird, bis der Kopf (17) der Schraube (15) mit seiner unteren Fläche in Kontakt gelangt zum Vorsprung (5) innerhalb der Bohrung (4) im Inneren der Zahnersatz-Vorrichtung (100). Dadurch wird die Zahnersatz-Vorrichtung (100) vorteilhafterweise an das Dentalimplantat (9) angedrückt. Um das Einschrauben der Schraube (15) zu erleichtern, weist die Schraube (15) in ihrem Kopfbereich (17) einen Hohlraum (21) auf, der beispielsweise eine Sechskantform zur Aufnahme eines Sechskant-Schraubendrehers aufweisen kann. Nach dem Einschrauben der Schraube (15) kann die frei gebliebene Bohrung (4) mit dem Füllmaterial (18) gefüllt und auf diese Weise verschlossen werden.

Es ist im Sinne der Erfindung bevorzugt, dass das Abutment (22) Kobalt, eine Kobalt-Chrom-Legierung, eine Nickel-Chrom-Legierung und/oder eine Legierung auf Grundlage mindestens eines Edelmetalls wie Platin, Gold, Palladium usw. umfassen kann. Ferner ist es im Sinne der Erfindung bevorzugt, dass die vorgeschlagene Zahnersatz-Vorrichtung (100) diese Materialien umfasst. Es kann im Sinne der Erfindung ferner bevorzugt sein, dass die in Figur 2 dargestellte Grundform einer bevorzugten Ausführungsform der Erfindung nicht in Verbindung mit einer Zahnkrone (8) verwendet wird, sondern in Verbindung mit einem Abutment (22), einer Brücke, einer Balkenkonstruktion, einer Brückenprothese und/oder einer anderen zahntechnischen Konstruktion, mit der im Mundraum eines Patienten verloren gegangene Zähne ersetzt werden sollen. Insofern ist die Erfindung bewusst nicht auf den Einsatz in Einzelzahnkronen (8) beschränkt, sondern der Begriff "Zahnersatz-Vorrichtung" soll im Sinne der Erfindung weiter verstanden werden.

### Beschreibung einer ersten Variante zur Anfertigung der Zahnersatz-Vorrichtung:

In einer ersten Variante zur Anfertigung der Zahnersatz-Vorrichtung (100) umfasst die Zahnersatz-Vorrichtung (100) im Wesentlichen eine Basis (2) und ein Interface (3), wobei das Interface (3) mit einer Schutzschicht (6) überzogen ist. Die Basis (2) kann vorzugsweise einen großen Bereich des Rohlings (1) beziehungsweise der Zahnersatz-Vorrichtung (100) darstellen und quaderförmig oder zylindrisch ausgebildet sein. Es ist im Sinne der Erfindung bevorzugt, dass der Ausgangsrohling (1) monolithisch ausgebildet ist, was im Sinne der Erfindung vorzugsweise bedeutet, dass der Rohling (1) umfassend das Interface (3) in einem Ganzen gegossen ist. Der Rohling (1) beziehungsweise die Zahnersatz-Vorrichtung (100) umfassen vorzugsweise ein Interface (3), welches als Verbindungselement gegenüber dem Dentalimplantat (9) dient.

In einer ersten Variante zur Anfertigung der Zahnersatz-Vorrichtung (100) wird das Interface (3) mit der Beschichtung (6) versehen, zum Beispiel mit einem der folgenden Verfahren: *Atomic Layer Deposition*-Vakuumbedampfung, chemisches Abscheideverfahren und/oder plasmachemisches Abscheideverfahren, wobei die Schutzschicht mindestens Material aus einer Gruppe umfassend Al₂O₃, Al₂O₃/TiO₂, Al₂O₃/Ta₂O₅, Al₂O₃/HfO₂und/oder eine Mischung daraus umfasst. Es können darüber hinaus Zusätze, wie ZrO₂ und/oder SnO₂, in der Beschichtung enthalten sein. Im Anschluss an die Aufbringung der Schutzschicht (6) auf den Rohling (1) wird die Basis (2) gefräst, so dass sie ungefähr die Form des zu ersetzenden Zahnes annimmt. Es ist insbesondere bevorzugt, dass hierfür die Methode des "anatomischen Fräsens" angewendet wird, bei der die Basis (2) etwas kleiner gefräst wird als der spätere Zahn. Der Begriff des "anatomischen Fräsens" wird im Sinne der Erfindung vorzugsweise als Änderung der Form durch Fräsen verstanden zum Zwecke einer ungefähren Formgebung, wobei diese Form der individuellen Zahnform des konkreten Patienten ähnlich sein soll. Grundlage für das anatomische Fräsen können beispielsweise Berechnungen sein, wobei nach dem Auftragen des keramischen Materials (7) und deren Sintern eine Form für die Zahnkrone (8) erhalten wird, die im Wesentlichen der individuellen Zahnform des konkreten Patienten entspricht.

Beim Fräsen kann der Überzug (6) von der Basis (2) entfernt werden, sodass die Schutzschicht (6) insbesondere auf dem Interface (3) verbleibt. Anschließend kann auf die gefräste Basis (2) keramisches Material (7) aufgetragen werden, wobei die Auftragung insbesondere in Schichten und/oder gemäß einer Berechnung aufgetragen werden kann, die dazu führt, dass nach einer Thermo-Bearbeitung, beispielsweise einen Sinter-Vorgang, die Basis (2) zusammen mit dem keramischen Material (7) im Wesentlichen der Form des zukünftigen Zahns des konkreten Patienten entspricht. Es kann im Sinne der Erfindung bevorzugt sein, dass das keramische Material (7) in Schichten aufgetragen wird, zum Beispiel nacheinander Schicht für Schicht mit einem Pinsel. Es ist im Sinne der Erfindung bevorzugt, dass die Gesamtstärke des keramischen Materials (7), sowie die Anzahl der Schichten des keramischen Materials (7) und deren Stärke und/oder Farbe individuell und in Abhängigkeit von den Besonderheiten der Zähne des konkreten Patienten ausgebildet sind. Das keramische Material (7) kann mit unterschiedlichen Verfahren auf die Basis (2) der Zahnersatz-Vorrichtung (100) aufgetragen werden. Beispielsweise kann das keramische Material (7) schichtweise aufgetragen und/oder aufgepresst werden. Vorzugsweise kann eine große Anzahl von unterschiedlichen Keramikmassen und/oder keramischen Systemen für die Herstellung einer Krone (8) im Sinne der vorliegenden Erfindung verwendet werden. Vorzugsweise weisen die keramischen Materialien (7) unterschiedliche Temperatur-und/oder Zeitregime für das Sintern und/oder die Bearbeitung des Materials auf. Es ist im Sinne der Erfindung bevorzugt, dass eine Gesamtstärke des keramischen Überzugs in einem Bereich von 0,1-5 mm liegt, bevorzugt bei 0,3 bis 2,5 mm.

Es ist im Sinne der Erfindung bevorzugt, dass Zahnersatz-Vorrichtung (100) umfassend die gefräste Basis (2) und das Interface (3) zum Sintern der keramischen Masse (7) in einem Sinterofen platziert wird. Vorzugsweise erfolgt das Sintern der Zahnersatz-Vorrichtung (100), insbesondere des keramischen Materials (7), bei einer Temperatur von 600 °C bis 1200 °C, bevorzugt bei Temperaturen von 600-700 °C. Die Vorsehung der Schutzschicht (6) im Bereich des Interfaces (3) der Zahnersatz-Vorrichtung (100) führt vorteilhafterweise zu, dass das Interface (3) beim Sintern des keramischen Materials (7) nicht oxidiert und sich seine Abmessungen auf diese Weise im Wesentlichen nicht verändern.

Es ist im Sinne der Erfindung insbesondere bevorzugt, dass die Schutzschicht (6) einen extrem dünnen Überzug darstellt, der beispielsweise durch das Aufbringungsverfahren des Vakuumbedampfens erreicht wird. Ein weiterer Vorteil der Schutzschicht (6) besteht darin, dass vorzugsweise ein elektrischer Isolator als Beschichtungsmaterial verwendet wird, wodurch vorteilhafterweise das Fließen von unerwünschten Strömen im Mundraum eines Patienten vermieden wird. Vorteilhafterweise muss das Interface (3), auf dem sich die Beschichtung (6) befindet, nach dem Sintern nicht zusätzlich bearbeitet werden, beispielsweise durch Sandstrahlen, wodurch das Interface (3) im Wesentlichen seine ursprünglichen, besonders exakten Abmessungen beibehält. Insbesondere behält das Interface (3) dadurch die hohe Präzision, mit der das Interface (3), beispielsweise unter Verwendung von Präzisionsdrehmaschinen gefertigt worden sein kann. Es ist im Sinne der Erfindung insbesondere bevorzugt, dass das Interface (3) unterschiedliche Formen haben kann, beispielsweise Konus, Sechskant, eine Kombination aus Konus und Sechskant oder eine andere Form.

### Beschreibung einer zweiten Variante zur Anfertigung der Zahnersatz-Vorrichtung:

In einer zweiten Variante zur Anfertigung der Zahnersatz-Vorrichtung (100) ist es bevorzugt, dass die Basis (2) eines Rohlings (1) zunächst gefräst wird und dann der gesamte Rohling (1) mit der Schutzschicht (6) versehen wird, wobei anschließend eine keramische Masse (7) vorzugsweise schichtweise auf die Basis (2) aufgetragen werden kann. Es ist im Sinne der Erfindung bevorzugt, dass Zahnersatz-Vorrichtung (100), die an das Dentalimplantat (9) angeschraubt wird, aus einem Zahnkronenrohling (1) hergestellt wird, wobei zur Herstellung des Rohlings (1) zum Beispiel eine Kobalt-Chrom-Legierung verwendet werden kann. Es ist im Sinne der Erfindung besonders bevorzugt, dass der Rohling (1) eine Basis (2) und das damit bevorzugt monolithisch verbundene Interface (3) umfasst. Es ist ferner bevorzugt, dass das Implantat (6) aus Titan gefertigt wird.

In einem ersten Verfahrensschritt wird der Rohling (1) so lange gefräst, bis der Rohling (1) eine Form aufweist, die ähnlich der Form des zu ersetzenden Zahnes des Patienten ist. Danach wird der gesamte Rohling (1) mittels der Methode der atomaren Pulverbeschichtung (ALD, CVD) mit einem Überzug (6) mit einer Stärke von zum Beispiel 0,01 µm bis 1 mm überzogen. Weiter können auf die Basis (1) mit der aufgetragenen Beschichtung (6) nacheinander, vorzugsweise schichtweise Deckschichten aus dem keramischen Material (7) mit einer Gesamtstärke im Bereich von 0,1-5 mm aufgetragen werden. Es ist im Sinne der Erfindung besonders bevorzugt, dass die keramische Masse (7) eine Feldspatkeramik und/oder Hydroxylapatitkeramik umfasst, wobei die keramischen Schichten (7) einem Brennprozess bei Temperaturen zwischen 800-1200 °C unterworfen werden. Es ist insbesondere bevorzugt, dass eine erste keramische Schicht (7) auf die Basis (1) aufgetragen wird und diese Schicht anschließend dem Brennprozess unterzogen und die erhaltene Zahnersatz-Vorrichtung (100) abgekühlt wird. Es wird sodann eine zweite Deckschicht aus dem keramischen Material (7) aufgetragen, gebrannt und abgekühlt. Dieser Vorgang kann so lange wiederholt werden, bis die nacheinander aufgebrachten keramischen Schichten (7) ein keramisches Material (7) in der gewünschten Stärke ergeben. Die auf diese Weise erhalten Zahnersatz-Vorrichtung (100) mit einer Zahnkrone (8) kann nach dem Abkühlen auf das Dentalimplantat (9) aufgesetzt und dort befestigt werden.

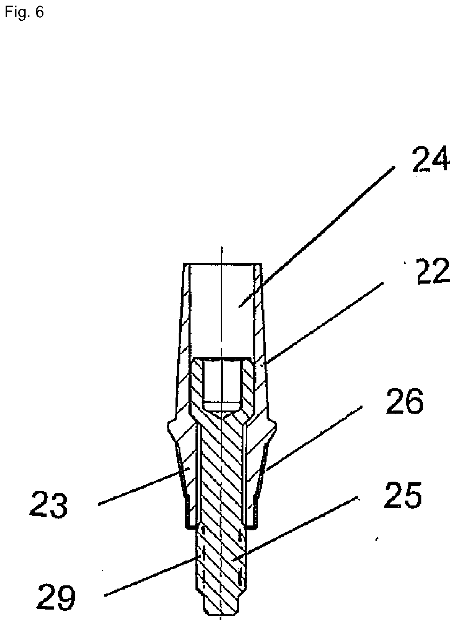

Figur 6 zeigt eine Darstellung einer bevorzugten Ausführungsform eines Abutments (22). Figur 6 zeigt insbesondere ein Abutment (22) ohne ein keramisches Material (7) zur Bildung einer Krone (8). Dargestellt ist in der Figur 6 insbesondere auch ein Interface (23), wobei das Abutment (22) und das Interface (23) eine durchgehende Bohrung (24) aufweisen. In dieser Bohrung (24) kann eine Befestigungsschraube (25) platziert sein. Das in Figur 6 dargestellte Interface (23) ist äußerlich in einer Konusform ausgeführt und weist eine Beschichtung (26) mit einer Stärke von 0,001 µm bis 0,1 mm aus Metalloxid oder einer Kombination von Metalloxiden auf, die vorzugsweise elektrisch isolierende Eigenschaften aufweisen.

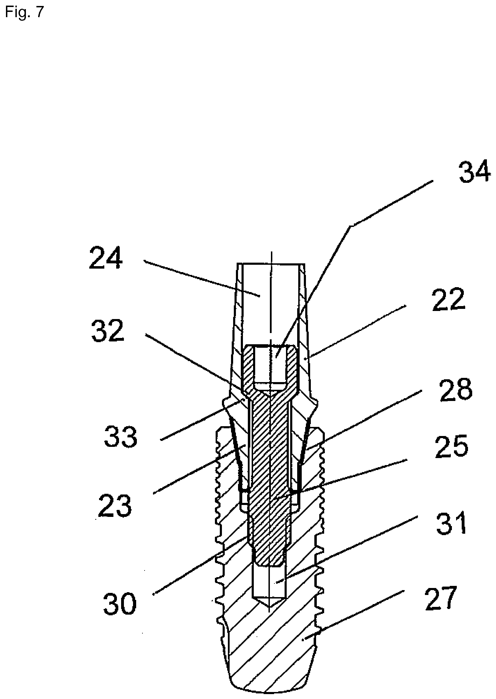

Figur 7 zeigt die Darstellung einer bevorzugten Ausführungsform eines Abutments (22), das in einem Dentalimplantat (27) vorliegt. Im Kieferknochen (10) eines Patienten kann ein Dentalimplantat (27) eingebracht sein, wobei das Implantat (27) in seinem oberen Bereich eine Vertiefung (28) aufweist, in die das Interface (23) eingeführt werden kann. Anschließend wird in das Innere der durchgehenden Bohrung (24) die Schraube (25) mit dem Schraubgewinde (29) eingesetzt und in das Schraubgewinde (30) in der Bohrung (31) des Implantats (27) so lange hineingeschraubt, bis der Kopf (32) der Schraube (25) mit der unteren Fläche auf dem Vorsprung (33) im Inneren der durchgehenden Bohrung (24) aufsetzt und das Abutment (22) an das Implantat (27) andrückt. Für das Einschrauben gibt es im Kopf (32) der Schraube (25) einem Hohlraum (34), der vorzugsweise in Sechskantform vorliegen kann, damit ein Sechskant-Schraubendreher besonders einfach verwendet werden kann. Nach dem Einschrauben kann der Raum oberhalb des Kopfes (32) der Schraube (25) mit einem Füllmaterial (18) gefüllt werden.

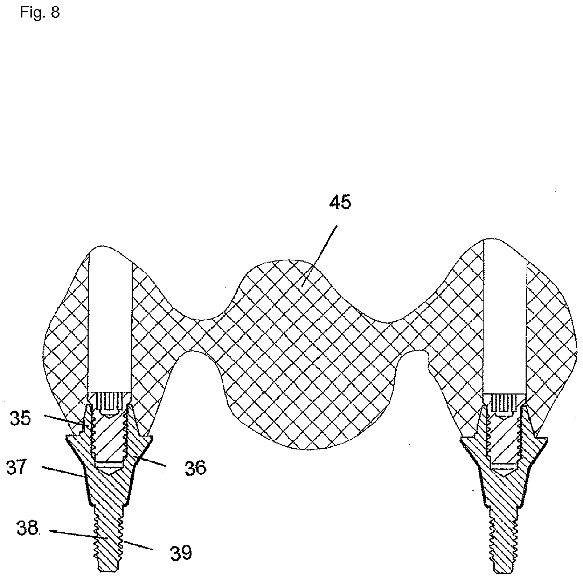

Abbildung 8 zeigt die Darstellung einer bevorzugten Ausführungsform der Zahnersatz-Vorrichtung (100) als Teil einer Brücke. Insbesondere zeigt Figur 8 ein Brückenelement (45), das mit zwei vorgeschlagenen Zahnersatz-Vorrichtungen (100) in den Kieferknochen (10) eines Patienten verankert werden kann. Die in Figur 8 dargestellten Zahnersatz-Vorrichtungen (100) umfassen jeweils ein Abutment (35), wobei die Zahnersatz-Vorrichtungen (100) in der in Figur 8 dargestellten Ausführungsform der Erfindung kein keramisches Material (7) zur Bildung einer Krone (8) aufweisen. In Figur 8 werden die Interfaces der Zahnersatz-Vorrichtungen (100) mit dem Bezugszeichen 36 bezeichnet. Diese Interfaces (36) sind vorzugsweise monolithisch mit einer Basis (nicht dargestellt) der Zahnersatz-Vorrichtung (100) verbunden. Die Interfaces (36) sind vorzugsweise in Konusform ausgeführt und mit einer Schutzschicht (6, nicht dargestellt) versehen. Die in Figur 8 dargestellten Interfaces (36) weisen an ihrer Stirnfläche jeweils einen zusätzlichen zylindrischen Vorsprung (38) auf, die jeweils ein Außengewinde (39) tragen.

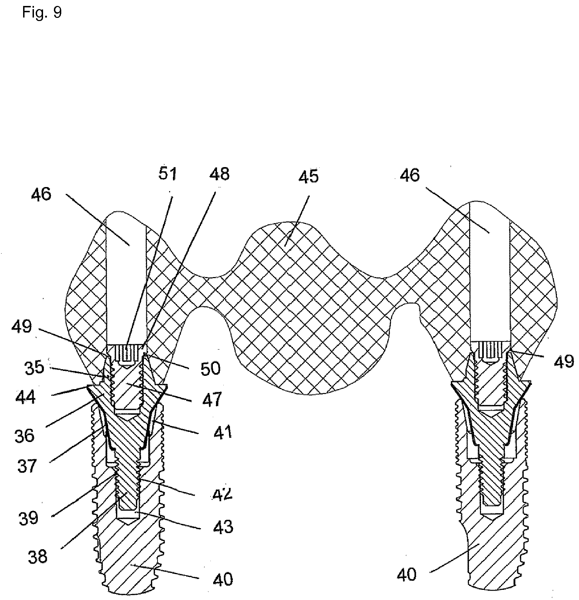

Figur 9 zeigt die Darstellung einer bevorzugten Ausführungsform der Zahnersatz-Vorrichtung (100) als Teil einer Brücke. Nach dem Einpflanzen des Implantats (40) in den Knochen kann auf die Zahnersatz-Vorrichtungen (100) das Brückenelement (45) montiert werden. Dazu werden die Interfaces (36), die jeweils mit einer Beschichtung (37) versehen sind, von oben in eine Vertiefung (41) im oberen Bereich des Implantats (40) eingeführt. Das Außengewinde (39) des Interfaces (36) wird so lange in das Schraubgewinde (42) in die Bohrung (43) des Implantats (40) hineingeschraubt, bis das Interface (36) mit seiner unteren Fläche auf die Stirnfläche (44) des Implantats (40) aufstößt. Dieser Vorgang wird für beide Zahnersatz-Vorrichtungen (100) wiederholt. Das Brückenelement (45) kann durchgehende Bohrungen (46) aufweisen, sowie eine Stirnfläche (50) und einen Konsolenvorsprung (49). Das Brückenelement kann auf die Zahnersatz-Vorrichtungen (100) aufgesetzt werden, so dass das Abutment (35) in die Erweiterungen im unteren Teil der durchgehenden Bohrungen (46) hineinragt. Danach kann das Brückenelement (45) mit Schrauben (47) mit dem Dentalimplantat (40) befestigt werden. Für das Einschrauben ist im Kopf (48) der Schraube (47) ein Hohlraum (51) vorgesehen, der vorzugsweise in Sechskantform vorliegt, damit ein Sechskant-Schraubendreher besonders einfach verwendet werden kann. Nach dem Einschrauben kann der Raum oberhalb des Kopfes (48) der Schraube (47) mit Füllmaterial (18) gefüllt werden.

### Bezugszeichenliste:

- 1: Ausgangskrone, Rohling
- 2: Basis
- 3: Interface
- 4: durchgehende Bohrung
- 5: Vorsprung
- 6: Schutzschicht
- 7: Keramikmasse, Keramikverblendung
- 8: Einzelkrone
- 9: Dentalimplantat
- 10: Kieferknochen
- 11: Stirnfläche
- 12: Vertiefung
- 13: Blindbohrung
- 14: Schraubgewinde
- 15: Schraube
- 16: Schraubgewinde
- 17: Schraubenkopf
- 18: Plombenmaterial (Füllmaterial)
- 19: Erweiterung, d.h. Verbreiterung in Sechskantform
- 20: Schraubgewinde auf der Außenfläche des Dentalimplantats
- 21: Hohlraum
- 22: Abutment
- 23: Interface
- 24: Bohrung
- 25: Schraube
- 26: Schutzschicht
- 27: Dentalimplantat
- 28: Vertiefung
- 29: Schraubgewinde
- 30: Schraubgewinde
- 31: Bohrung
- 32: Schraubenkopf
- 33: Interface
- 34: Hohlraum
- 35: Abutment
- 36: Interface
- 37: Schutzschicht
- 38: Dentalimplantat
- 39: Außengewinde
- 40: Dentalimplantat
- 41: Vertiefung
- 42: Schraubgewinde
- 43: Bohrung
- 44: Stirnfläche
- 45: Brückenelement
- 46: Bohrung
- 47: Schraube
- 48: Schraubenkopf
- 49: Konsolenvorsprung
- 50: Stirnfläche
- 51: Hohlraum
- 100: Zahnersatz-Vorrichtung

## Patentansprüche

1. Verfahren zur Herstellung einer Zahnersatz-Vorrichtung (100) umfassend ein Interface (3) und eine Basis (2)
**umfassend die folgenden Schritte:**
a) Bereitstellung eines Rohlings (1),
b) Bereitstellung einer Schutzschicht (6) zur Abdeckung des Rohlings (1), wobei am Ende des Verfahrens insbesondere das Interface (3) mit der Schutzschicht (6) bedeckt vorliegt.

2. Verfahren nach Anspruch 1,
**dadurch gekennzeichnet, dass**
das Verfahren den zusätzlichen Schritt des Fräsens des Rohlings (6) umfasst, wodurch die Basis (2) der Zahnersatz-Vorrichtung (100) erhalten wird.

3. Zahnersatz-Vorrichtung (100), die mit dem Verfahren nach Anspruch 1 oder 2 hergestellt wird, wobei die Zahnersatz-Vorrichtung (100) ein Interface (3) und eine Schutzschicht (6) umfasst und das Interface (3) mit der Schutzschicht (6) bedeckt vorliegt.

4. Verfahren oder Zahnersatz-Vorrichtung (100) nach einem oder mehreren der vorhergehenden Ansprüche
**dadurch gekennzeichnet, dass**
die Schutzschicht (6) dünner ist als 0,1 mm, bevorzugt dünner als 0,01 mm, besonders bevorzugt dünner als 1 µm und am meisten bevorzugt dünner als 0,1 µm.

5. Verfahren oder Zahnersatz-Vorrichtung (100) nach einem oder mehreren der vorhergehenden Ansprüche
**dadurch gekennzeichnet, dass**
die Schutzschicht (6) mindestens ein Metalloxid umfasst, wobei das Metalloxid ausgewählt ist aus einer Gruppe umfassend Al₂O₃, Al₂O₃/TiO₂, Al₂O₃/Ta₂O₅, Al₂O₃/HfO₂ und/oder eine Mischung daraus.

6. Verfahren oder Zahnersatz-Vorrichtung (100) nach einem oder mehreren der vorhergehenden Ansprüche
**dadurch gekennzeichnet, dass**
die Schutzschicht (6) mit einem *Atomic Layer Deposition*-Verfahren, einer Methode der Vakuumbedampfung und/oder durch ein chemisches und/oder plasmachemisches Abscheideverfahren auf den Rohling (1) aufgebracht wird.

7. Verfahren oder Zahnersatz-Vorrichtung (100) nach einem oder mehreren der vorhergehenden Ansprüche
**dadurch gekennzeichnet, dass**
die Schutzschicht (6) einen Zusatz umfasst, wobei der Zusatz ausgewählt ist aus einer Gruppe umfassend ZrO₂ und/oder SnO₂.

8. Verfahren oder Zahnersatz-Vorrichtung (100) nach einem oder mehreren der vorhergehenden Ansprüche
**dadurch gekennzeichnet, dass**
die Materialien der Schutzschicht (6) elektrisch isolierende Eigenschaften aufweisen.

9. Verfahren oder Zahnersatz-Vorrichtung (100) nach einem oder mehreren der vorhergehenden Ansprüche
**dadurch gekennzeichnet, dass**
die Zahnersatz-Vorrichtung (100) ein keramisches Material (7) zur Bildung einer Krone (8) umfasst.

10. Zusammensetzung umfassend ein Metalloxid, wobei das Metalloxid ausgewählt ist aus einer Gruppe umfassend Al₂O₃, Al₂O₃/TiO₂, Al₂O₃/Ta₂O₅, Al₂O₃/HfO₂ und/oder eine Mischung daraus.

11. Verwendung der Zusammensetzung nach Anspruch 10 als Schutzschicht (6) zur Aufbringung auf eine Zahnersatz-Vorrichtung (100).

12. System umfassend eine Zahnersatz-Vorrichtung (100) nach einem oder mehreren der Ansprüche 3 bis 9 und ein Dentalimplantat (9), wobei eine Schutzschicht (6) auf dem Interface (3) der Zahnersatz-Vorrichtung (100) dazu eingerichtet ist, einen Fluss eines elektrischen Stroms zwischen dem Dentalimplantat (9) und der Zahnersatz-Vorrichtung (100) zu unterbinden.
